# EUROPÄISCHE PATENTANMELDUNG

(11) **EP 2 175 161 A2**
(43) Veröffentlichungstag der Anmeldung: **14.04.2010**
(21) Anmeldenummer: 09171929.4
(22) Anmeldetag: 01.10.2009
(51) Int. Cl.: F16F 9/512

(54) **Ventileinrichtung mit amplitudenabhängiger Dämpfkraft**

(30) Priorität: 07.10.2008 DE 102008042637
(71) Anmelder: ZF Friedrichshafen AG, 88038 Friedrichshafen (DE)
(72) Erfinder: Heyn, Steffen, 97464, Niederwerrn (DE); Zeißner, Bernd, 97332, Volkach (DE)

(57) **Zusammenfassung**

Ventileinrichtung (1) für einen Schwingungsdämpfer (3), umfassend ein Dämpfventil (31,33) mit einem Dämpfventilkörper (9) mit mindestens einem Durchtrittskanal (15,17) für eine Strömungsrichtung, wobei eine Austrittsöffnung des Durchtrittskanal von einem Ventilkörper (19,21) zumindest teilweise abgedeckt wird, wobei die Ventileinrichtung zu dem Dämpfventil einen Bypasskanal (49,51,53) aufweist, der Dämpfmedium zu einem Steuerraum (43) führt, dessen Druckniveau die Dämpfkraft der Ventileinrichtung beeinflusst, wobei der Ventilkörper (21) des Dämpfventils (33) an den Steuerraum (43) angeschlossen ist und eine Rückseite des Ventilkörpers vom Druckniveau im Steuerraum beaufschlagt wird, wobei der Bypass zum Steuerraum durch den Ventilkörper verläuft.

## Beschreibung

Die Erfindung betrifft eine Ventileinrichtung für einen Schwingungsdämpfer mit amplitudenabhängiger Dämpfkraft gemäß dem Oberbegriff von Patentanspruch 1.

DE 31 00 910 C2 beschreibt ein Dämpfventil für einen Schwingungsdämpfer. Das Dämpfventil umfasst einen Dämpfventilkörper mit Durchtrittskanälen für zwei Durchströmungsrichtungen. Die Durchtrittskanäle werden an ihren Austrittsöffnungen von mindestens einem Ventilkörper zumindest teilweise abgedeckt. An einer Unterseite des Dämpfventilkörpers ist eine axial bewegliche Ventilscheibe angeordnet, die über einen radial verlaufenden Schlitz einen so genannten Voröffnungsquerschnitt aufweist, der unabhängig von der axialen Stellung der Ventilscheibe stets zwei Arbeitsräume innerhalb des Schwingungsdämpfers verbindet. Die Größe des Voröffnungsquerschnitts bestimmt die kleinstmögliche Dämpfkraft bezogen auf einen Volumenstrom durch die Durchtrittskanäle.

Der Ventilkörper an der Unterseite wird von einem massiven Ventilring gebildet, der von einer Druckfeder in Richtung des Dämpfventilkörpers vorgespannt wird. Die Dämpfkraftkennlinie wird u. a. von der Kombination der Größe des Voröffnungsquerschnitts und dem Öffnungsverhalten des Ventilrings bestimmt. Das Öffnungsverhalten des Ventilrings ist z. B. abhängig von der Vorspannung und der Federkraftkennlinie der Druckfeder oder auch von der Größe der druckbeaufschlagten Fläche an der Austrittsseite der Durchtrittskanäle in Richtung des Ventilrings.

Die Dimensionierung der Parameter am Dämpfventil stellt in der Regel einen Kompromiss dar zwischen Komfort durch eine große Voröffnung und einer geringen Öffnungskraft am Ventilring und hoher Fahrstabilität mit einer kleinen Voröffnung und einer größeren Öffnungskraft.

Aus der WO 2003040586 A1 ist ein Schwingungsdämpfer bekannt, dessen Dämpfkraftkennlinie frequenzabhängig gesteuert wird. Neben einem konventionellen Dämpfventil entsprechend der DE 31 00 910 C2 steht über einen Bypasskanal in der Kolbenstange ein frequenzabhängiges Dämpfventil zur Verfügung. Das Dämpfmedium kann bei einer Kompressionsbewegung der Kolbenstange in Richtung des kolbenstangenseitigen Arbeitsraums durch die Durchtrittskanäle den von einer Druckfeder vorgespannten Ventilring beaufschlagen. Hydraulisch parallel geschaltet fließt ein Volumenstrom durch den Bypasskanal und passiert eine Zentralöffnung in einem axial schwimmend gelagerten Ventilkörper, der mindestens eine Ventilscheibe gegen einen Ventilsitz eines Gehäuses vorspannt. Der Ventilkörper bildet mit einem Gehäuseboden einen Steuerdruckraum. Der Druck im Steuerdruckraum wirkt auf die der Ventilscheibe abgewandete Rückseite des Ventilkörpers und spannt den Ventilkörper und damit auch die Ventilscheibe mehr oder weniger stark vor. Der gesamte Volumenstrom zum frequenzabhängigen Dämpfventil muss den Bypass bis zur besagten Zentralöffnung passieren. Danach unterteilt sich der Dämpfmediumstrom in einen Steuervolumenstrom durch die Zentralöffnung und in einen Hauptmediumstrom entlang des Ventilsitzes.

Bei einer niederfrequenten Kompressionsbewegung der Kolbenstange baut sich im Steuerraum ein geringerer Druck auf, so dass auch bei noch geschlossenem Ventilring am Kolben die Ventilscheibe schon von seinem Ventilsitz im Gehäuse abheben kann. Es liegt dann eine kleine Dämpfkraft vor. Eine entsprechend höherfrequente Bewegung der Kolbenstange steigert den Druck im Steuerraum, so dass die notwendige Abhubkraft im Bypass ebenfalls einsteigt. Durch diese kombinierte Anordnung von einem druckabhängigen und einem über einen Bypass frequenzabhängigen Dämpfventil kann das Verhältnis von minimaler Dämpfkraft zu maximaler Dämpfkraft deutlich vergrößert werden.

Ein konstruktiver Nachteil der Ventileinrichtung nach der WO2003040586 A1 besteht darin, dass der Hauptmediumstrom zum frequenzabhängigen Dämpfventil durch den Bypass, gebildet von einer Bohrung in der Kolbenstange, fließen muss. Bei einem vorgegebenen Bauraum kann sich eine relativ dünne Wandstärke am Kolbenstangenzapfen einstellen.

Die Aufgabe der vorliegenden Erfindung besteht darin, eine alternative Ventileinrichtung zu schaffen, die ebenfalls ein großes Verhältnis zwischen maximaler und minimaler Dämpfkraft aufweist.

Erfindungsgemäß wird die Aufgabe dadurch gelöst, dass der Ventilkörper des Dämpfventils an den Steuerraum angeschlossen ist und eine Rückseite des Ventilkörpers vom Druckniveau im Steuerraum beaufschlagt wird, wobei der Bypass zum Steuerraum durch den Ventilkörper verläuft.

Der Hauptstrom des Dämpfmediums fließt an der Vorderseite des Ventilkörpers, der Teil eines Sitzventils ist, vorbei und nur ein Steuervolumenstrom muss den Bypass passieren. Dadurch kann der Querschnitt des Bypasses klein dimensioniert werden, so dass insgesamt ein geringer Bauraum für das Ventil benötigt wird.

In weiterer vorteilhafter Ausgestaltung weist die Ventileinrichtung ein topfförmiges Steuerraumgehäuse auf, in dem der Ventilkörper gleitet.

In dem Steuerraumgehäuse ist eine auf den Ventilkörper wirkende Schließfeder angeordnet, die im Vergleich zum Stand der Technik deutlich schwächer ausgelegt werden kann, da der Druck im Dämpfmedium einen nennenswerten Anteil an der benötigten Schließkraft erzeugt. Eine schwächere Feder kann hinsichtlich der auftretenden Spannungen auf eine Haltbarkeit dimensioniert werden.

Gemäß einem Unteranspruch umfasst der Ventilkörper eine Ventilkörperscheibe und eine Führungshülse, wobei die Führungshülse im Steuerraum gleitet. Durch die Verwendung einer Führungshülse wird eine strikte Trennung zwischen Ventilkörper und Steuerraum erreicht. Insbesondere kann dann eine etwas größere druckbeaufschlagte Fläche in Abhubrichtung des Ventilkörpers vorgesehen sein, so dass keine hydraulische Selbstblockierung des Dämpfventils auftreten kann.

Im Hinblick auf einen insgesamt einfachen konstruktiven Aufbau begrenzt ein die Ventileinrichtung haltender Führungsbolzen zusammen mit dem Steuerraumgehäuse und der Ventilkörperscheibe den Steuerraum. Der Führungsbolzen kann z. B. von einem Kolbenstangenzapfen gebildet werden.

Des Weiteren ist vorgesehen, dass der Steuerraum einen Strömungsanschluss zu einem Druckraum aufweist. Dieser Druckraum steht unter einer Druckvorspannung.

Dazu kann beispielsweise vorgesehen sein, dass der Druckraum zu einem Rückraum durch einen verschiebbaren Trennkolben getrennt ist. Der größenveränderliche Druckraum bewirkt einen verzögerten Druckaufbau im Steuerraum. Bei idealer Betrachtung muss der Trennkolben erst seine Endstellung erreicht haben, bis der Druck im Steuerraum soweit ansteigt, dass auf den Ventilkörper eine zunehmend größere Schließkraft wirkt. Eine größere Schließkraft führt zu einer größeren Dämpfkraft am Dämpfventil, da eine entsprechend größere Abhubkraft notwendig ist. Die Befüllung des Druckraums über den Volumenanteil des Steuervolumenstroms führt dazu, dass der Druckraum vergleichsweise klein dimensioniert sein kann. Bei geöffnetem Dämpfventil fließt der Hauptstrom von einem Arbeitsraum in einen anderen Raum des Schwingungsdämpfers und nur ein kleiner Steuervolumenstrom wird für die Anpassung der Dämpfkraft benutzt. Aufgrund dieses Verhaltens ist die Dämpfkraft abhängig vom Kolbenstangenhubweg.

Im Hinblick auf eine insgesamt kompakte Baueinheit ist der Trennkolben in einem Druckraumgehäuse angeordnet ist, das an dem Führungsbolzen befestigt ist, wobei der Trennkolben als Ringkolben ausgeführt ist.

Der Trennkolben ist auf dem Führungsbolzen axial verschiebbar geführt. Bei einem Führungsbolzen an einer Kolbenstange entsteht kein Mehraufwand für die Dichtfläche zum Trennkolben.

Ein durch den Trennkolben vom Druckraum abgetrennter Rückraum ist mit Dämpfmedium gefüllt, wobei eine Druckausgleichsöffnung zum Druckraum von einem Rückschlagventil gesteuert wird, das sich in Abflussrichtung des Dämpfmediums aus dem Rückraum öffnet. Durch die Dimensionierung der Druckausgleichsöffnung kann indirekt der Druckaufbau im Druckraum und dadurch die Schließkraft auf den Ventilkörper bestimmt werden.

Das Rückschlagventil wird ganz einfach von mindestens einer elastischen Scheibe gebildet, die zwischen dem Druckraumgehäuse und dem Steuerraumgehäuse verspannt ist.
Zur Erzeugung der Vorspannung im Druckraum sind verschiedene Möglichkeiten denkbar. Bei einer ersten Variante wird der Trennkolben von mindestens einer Feder in Richtung des Steuerraums vorgespannt.

Alternativ kann in dem Druckraum ein Gaspolster angeordnet sein.

Eine weitere Maßnahme im Hinblick auf eine kompakte Baueinheit der gesamten Ventileinrichtung wird dadurch erreicht, dass das Druckraumgehäuse das Steuerraumgehäuse mit dem Dämpfventilkörper am Führungsbolzen verspannt.

Um den radialen Bauraum günstig ausnutzen zu können, weist das Steuerraumgehäuse mindestens einen Anschlusskanal an einen Durchtrittskanal für eine zum Steuerraum entgegengesetzte Strömungsrichtung auf. In einer Wandung des Steuerraumgehäuses kann der axial verlaufende Anschlusskanal praktisch als Verlängerung des Durchtrittskanals verlaufen.

Anhand der folgenden Figurenbeschreibung soll die Erfindung näher erläutert werden.

Es zeigt:
- Fig. 1: Ventileinrichtung in einer Schnittdarstellung
- Fig. 2: Detailansichtung zur Fig. 1
- Fig. 3: Alternativvariante zur Fig. 1
- Fig. 4: Detailansicht zur Fig. 3
- Fig. 5: weitere Alternativvariante zur Fig. 1

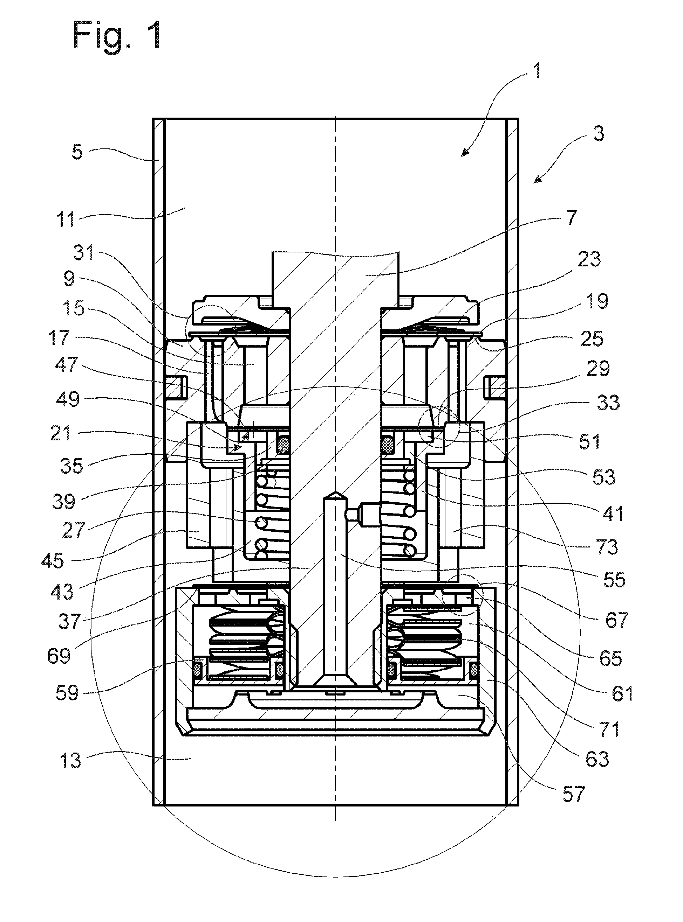

Die Figur 1 zeigt eine Ventileinrichtung 1 in einem Schwingungsdämpfer 3 beliebiger Bauform. Der Schwingungsdämpfer 3 umfasst einen mit Dämpfmedium gefüllten Zylinder 5, in dem eine Kolbenstange 7 axial beweglich geführt ist. An der Kolbenstange 7 ist ein Kolben 9 befestigt, der den Zylinder 5 in einen kolbenstangenseitigen und einen kolbenstangenfernen Arbeitsraum 11; 13 unterteilt. Der Kolben 9 verfügt über Durchtrittskanäle 15; 17 für den Übertritt von Dämpfmedium von einem Arbeitsraum in den jeweils anderen. Die Durchtrittskanäle 15 sind für die Strömungsrichtung ausgehend vom kolbenstangenseitigen Arbeitsraum 11 zum kolbenstangenfernen Arbeitsraum 13 vorgesehen. Für die entgegengesetzte Strömungsrichtung stehen die Durchtrittskanäle 17 zur Verfügung. Beide Durchtrittskanalgruppen 15; 17 werden an ihren Austrittsöffnungen von mindestens einem Ventilkörper 19; 21 zumindest teilweise abgedeckt. Eine sternförmige Scheibenfeder 23 spannt die Ventilscheibe 19 auf eine oberseitige Ventilsitzfläche 25 des Kolbens 9 vor.

Der Ventilkörper 21 wird von einer Schließfeder 27 gegen eine unterseitige Ventilsitzfläche 29 gedrückt. Die Durchtrittskanäle 17 mit der Ventilscheibe 19 und der Scheibenfeder 23 bilden ein erstes Dämpfventil 31. Ein zweites Dämpfventil 33 bilden die Durchtrittskanäle 15 zusammen mit dem Ventilkörper 21 und der Schließfeder 27, wobei der Kolben 9 für beide Dämpfventil 31; 33 den Dämpfventilkörper bildet.

Der Ventilkörper 21 umfasst eine starre Ventilscheibe 35, die an ihrem Innendurchmesser zu einem Führungsbolzen 37, gebildet von einem Kolbenstangenzapfen, über eine Ringdichtung 39 abgedichtet ist. Der Ventilscheibe 35 schließt sich eine Führungshülse 41 an. Der Ventilkörper 21 gleitet über seine Führungshülse 41 in einem Steuerraum 43, der von einem topfförmigen Steuerraumgehäuse 45 gebildet wird, in dem auch die Schließfeder 27 angeordnet ist. Der Steuerraum 43 wird folglich von dem die Ventileinrichtung 1 haltenden Führungsbolzen 37, dem Steuerraumgehäuse 45 und dem Ventilkörper 21 begrenzt.

Zwischen dem Ventilkörper 21 und der Ventilsitzfläche 29 ist eine Zulaufdrosselscheibe 47 verspannt, die Voröffnungsscheibe 47 über eine Übertrittsöffnung 49 in eine Ringnut 51 des Ventilkörpers 21 verfügt. Mindestens eine Abflussöffnung 53 verbindet die Ringnut 51 mit dem Steuerraum 43.

Der Steuerraum 43 weist einen Strömungsanschluss 55 zu einem Druckraum 57 auf. In einem ersten Teilabschnitt ausgehend vom Steuerraum 43 ist der Strömungsanschluss 55 mit einem gestuften Profil ausgeführt. Der Querschnitt des kleineren Durchmessers im gestuften Profil bestimmt in Verbindung mit der Übertrittsöffnung 49 den Öffnungsdruck auf den Ventilkörper 21 hinsichtlich einer kleinen Dämpfkraft. Die Längsbohrung im Führungsbolzen 37 ist im Hinblick auf einen möglichst geringen Temperatureinfluss deutlich größer ausgeführt. Der Druckraum 57 wird von einem axial verschiebbaren Trennkolben 59 zu einem Rückraum 61 getrennt, wobei beide Räume 57; 61 und der Trennkolben 59 in einem Druckraumgehäuse 63 angeordnet sind, das ebenfalls an dem Führungsbolzen 37 befestigt ist. Der Trennkolben 59 ist als Ringkolben ausgeführt und gleitet axial verschiebbar auf dem Führungsbolzen 37. Über den axial beweglichen Trennkolben 59 ist der Druckraum 57 volumenveränderbar, wobei sich die Volumina des Druckraums 57 und des Rückraums 61 gegenläufig verändern.

Der mit Dämpfmedium gefüllte Rückraum 61 ist über mindestens eine Druckausgleichsöffnung 65 mit dem kolbenstangenfernen Arbeitsraum 13 verbunden, wobei die Druckausgleichsöffnung 65 von einem Rückschlagventil 67 gesteuert wird, das in Abflussrichtung aus dem Rückraum 61 öffnet. Das Rückschlagventil 67 wird von mindestens einer elastischen Scheibe 69 gebildet, die zwischen dem Druckraumgehäuse 63 und dem Steuerraumgehäuse 45 verspannt ist.

In diesem Ausführungsbeispiel ist innerhalb des Rückraums 61 mindestens eine Feder 71 angeordnet, die den Trennkolben 59 in Richtung des Steuerraums 43 vorspannt.

Über die Übertrittsöffnung 49 innerhalb der Zulaufdrosselscheibe, der Ringnut 51 im Ventilköper 21, dem Steuerraum 43 und dem Strömungsanschluss 55 besteht ein Bypass in Richtung des Druckraums 57 bezogen auf einen Volumenstrom entlang der Ventilsitzfläche 29. Folglich kann Dämpfmedium im Steuerraum die der Ventilsitzfläche 29 abgewandte Rückseite des Ventilkörpers 21 mit dem Druckniveau im Steuerraum 43 in Schließrichtung beaufschlagen. Über den beschriebenen Weg in den Steuerraum 43 verläuft der Bypass direkt durch den Ventilkörper 21.

Bei einer Kolbenstangenbewegung in Richtung des Arbeitsraums 11 wird Dämpfmedium durch die Durchtrittskanäle 15 in Richtung der Zulaufdrosselscheibe 47 verdrängt. Ein Teil des Volumenstroms kann unabhängig von der Stellung des Ventilkörpers 21 zur Ventilsitzfläche 29 durch einen nicht dargestellten Voröffnungsquerschnitt, z. B. in der Form einer Kerbe im Ventilsitzfläche 29, in den kolbenstangenfernen Arbeitsraum 13 übertreten.

Der von der Übertrittsöffnung 49 innerhalb der Voröffnungsscheibe 47 und der Ringnut 51 sowie der mindestens einen Abflussöffnung 53 innerhalb des Ventilkörper 21 kann ein Steuervolumenstrom in den Steuerraum 43 fließen.

Über den Strömungsanschluss 55 gelangt das Dämpfmedium in den Druckraum 57, dessen Volumen entgegen der Federkraft der mindestens einen Feder 71 ansteigt. Mit der Axialverschiebung des Trennkolbens 59 steigt der Druck im Druckraum 57 und damit auch im Steuerraum 43. Das gestiegene Druckniveau im Steuerraum 43 bewirkt eine zunehmend größere Schließkraft auf den Ventilkörper 21. Zwar kann der Druck im Steuerraum 43 den Ventilkörper 21 tendenziell verschließen, doch ist die druckbeaufschlagte Fläche an der Oberseite der Zulaufsdrosselscheibe 47 größer als die kreisringförmige druckbeaufschlagte Fläche des Ventilkörpers 21 mit seiner Führungshülse 41 innerhalb des Steuerraums 43, so dass das Dämpfventil 33 bei einer Spitzenbelastung eine beschränkte Öffnungsposition einnimmt.

Bei einer Verdrängungsbewegung des Trennkolbens 59 in den Rückraumraum 61 wird das dort befindliche Dämpfmedium über das geöffnete Rückschlagventil 67 in den kolbenstangenfernen Arbeitsraum 13 verdrängt.

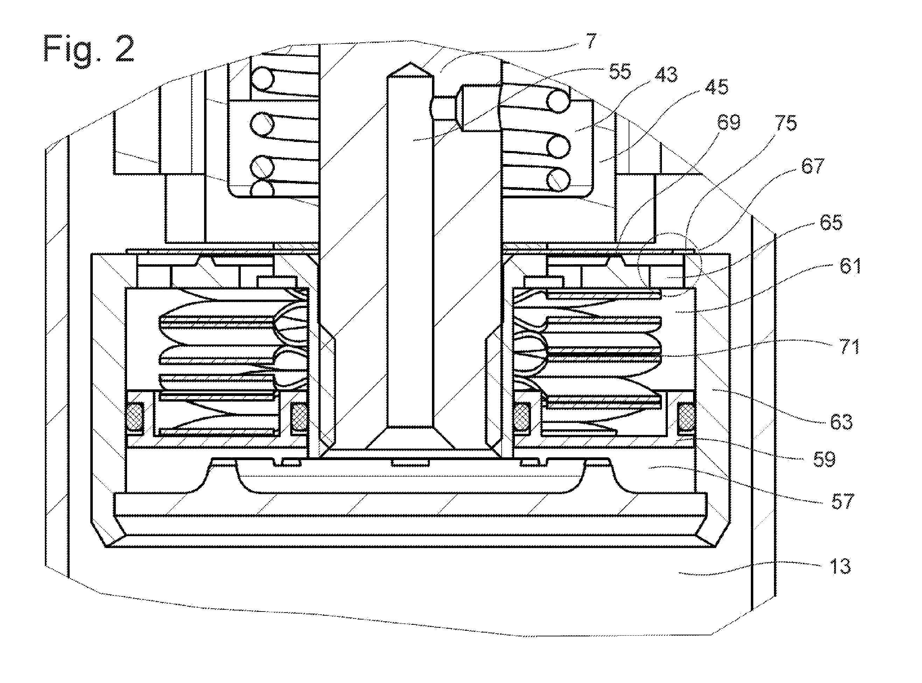

Eine Kolbenstangeneinfahrbewegung in Richtung des kolbenstangenfernen Arbeitsraums 13 erzeugt über die Durchtrittskanäle 17 am ersten Dämpfventil 31 eine Dämpfkraft. Dabei kann das Dämpfmedium über mindestens einen Anschlusskanal 73 innerhalb einer Wandung des Steuerraumgehäuses 45 an die Durchtrittskanäle 17 gelangen, also für die entgegengesetzte Strömungsrichtung zum Steuerraum 43. Die Dämpfkraft wird nicht von einem Steuerraum beeinflusst. Mit der Kolbenstangeneinfahrbewegung wird der Rückraum 61 im Druckraumgehäuse 63 über mindestens einen Drosselquerschnitt 75 (s. Fig. 2) wieder gefüllt. Aufgrund der Druckabnahme im Druckraum 57 und im Steuerraum 43 bei der Bewegungsrichtungsumkehr der Kolbenstange 7 hat der Ventilkörper 21 seine Schließstellung eingenommen. Ein aufgrund der Trennkolbenbewegung vorliegendes Abflussvolumen im Druckraum 57 kann über den Strömungsanschluss 55 und den Steuerraum 43 in Richtung der Oberseite der Voröffnungsscheibe 47 entweichen. Mit dem Drosselquerschnitt 75 soll eine gezielt bedämpfte Rückstellbewegung des Trennkolbens realisiert werden.

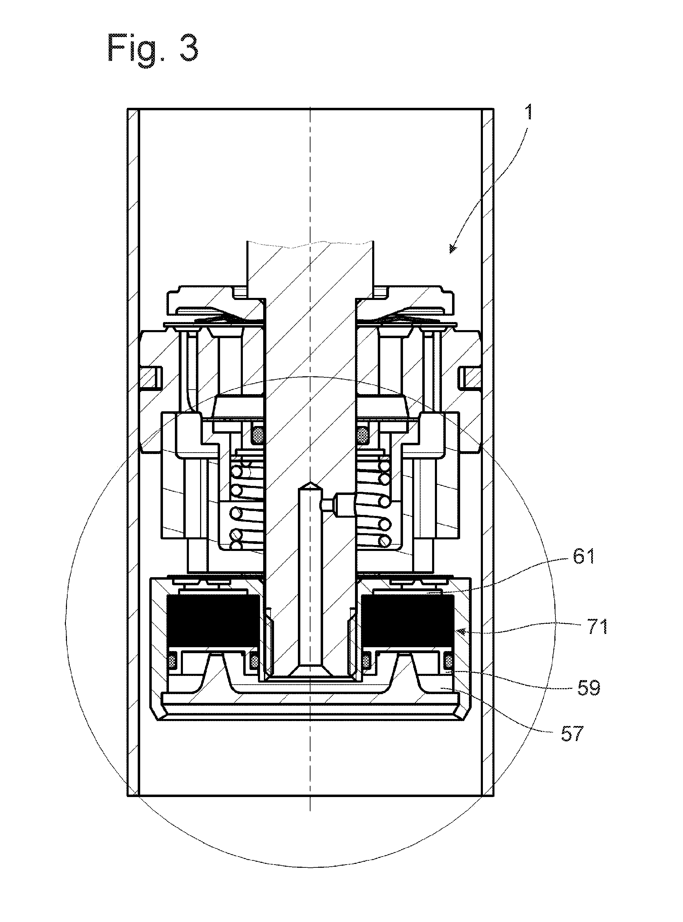

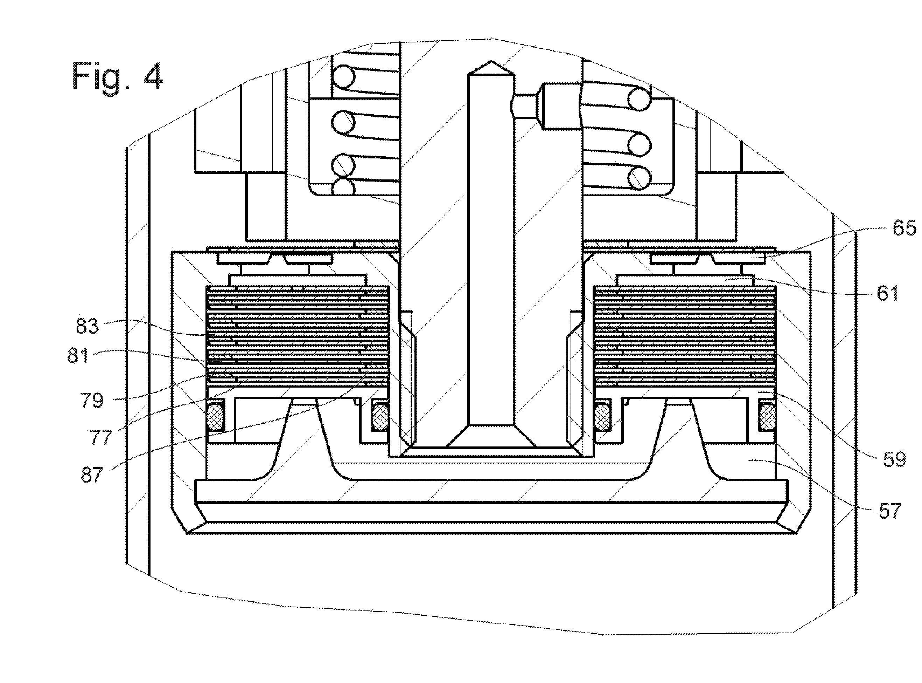

Die Figuren 3 und 4 zeigen eine funktional identische Ventileinrichtung 1 wie zur Fig. 1. Der Unterschied besteht in dem Federsatz 71 im Rückraum 61. Abweichend werden keine Wellfeder oder Tellerfedern verwendet, sondern einfache ebene Scheiben aus Federstahl, die wie die Fig. 4 zeigt, systematisch geschichtet sind. Ausgehend vom Trennkolben 59 wird eine innen zentrierte Distanzscheibe 77 mit vergleichsweise geringer Breite mit einer Scheibe 79 kombiniert, die außenseitig mindestens eine Ausnehmung 81 aufweist. Dieser Scheibe 81 schließt sich eine außen zentrierte Distanzscheibe 83 an, auf der eine Scheibe 85 mit einer Ausnehmung 87 am Innendurchmesser aufliegt. Diesem Grundmuster können mehrere Scheibenpakete folgen, bis der Rückraum 61 gefüllt ist. Durch die wechselweise Anordnung der innen und außen zentrierten Distanzscheiben kann der gesamte Scheibenstapel axial zusammengedrückt werden. Ein großer Vorteil dieser Variante liegt im Teilepreis für die verwendeten Scheiben. Das Dämpfmedium im Rückraum 61 kann über die Ausnehmungen 81; 87 die Druckausgleichsöffnungen 65 erreichen.

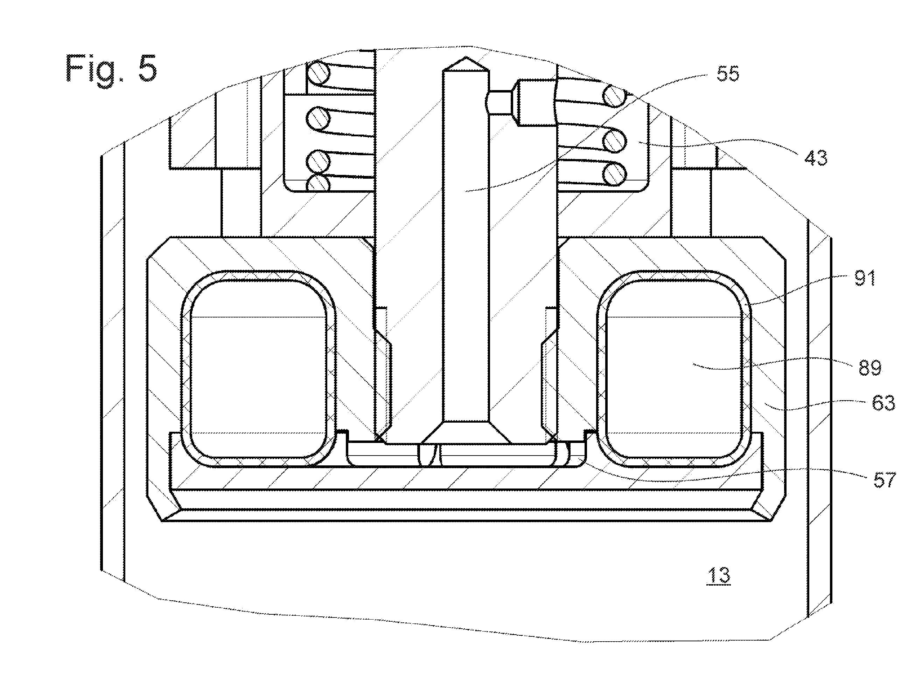

In der Figur 5 wird eine weitere Möglichkeit für eine auf den Druckraum 57 wirkende Vorspannkraft gezeigt. Abweichend zu den Figuren 1 bis 4 wird kein Trennkolben verwendet, sondern ein Gaspolster 89, das z. B. in einer flexiblen Hülle 91 gekammert ist. Auch diese Ventileinrichtung 1 folgt dem Wirkprinzip nach den Fig. 1 und 2. Anstatt der Trennkolbenbewegung wird das Gaspolster 89 bei einer Kolbenstangenbewegung in Richtung des kolbenstangenseitigen Arbeitsraums 11 komprimiert. Der Vorteil besteht u. a. darin, dass man keine Befüllung des Rückraums über ein Rückschlagventil 67 benötigt. Es fallen keine Reibungsverluste an, da die flexible Hülle 91 keinem Reibkontakt ausgesetzt ist.

Die erfindungsgemäße Ventileinrichtung ist nicht auf die Anordnung an einer Kolbenstange 7 beschränkt, sondern kann auch als eine zum Zylinder 5 des Schwingungsdämpfers 3 ortsfeste Baugruppe verwendet werden, z. B. als ein so genanntes Bodenventil oder auch als außerhalb des Zylinders 5 montiertes Element.

### Bezugszeichenliste

- 1: Ventileinrichtung
- 3: Schwingungsdämpfer
- 5: Zylinder
- 7: Kolbenstange
- 9: Kolben
- 11: kolbenstangenseitiger Arbeitsraum
- 13: kolbenstangenferner Arbeitsraum
- 15; 17: Durchtrittskanäle
- 19; 21: Ventilkörper
- 23: Scheibenfeder
- 25; 29: Ventilsitzfläche
- 27: Schließfeder
- 31: erstes Dämpfventil
- 33: zweites Dämpfventil
- 35: Ventilscheibe
- 37: Führungsbolzen
- 39: Ringdichtung
- 41: Führungshülse
- 43: Steuerraum
- 45: Steuerraumgehäuse
- 47: Zulaufdrosselscheibe
- 49: Übertrittsöffnung
- 51: Ringnut
- 53: Abflussöffnung
- 55: Strömungsanschluss
- 57: Druckraum
- 59: Trennkolben
- 61: Rückraum
- 63: Druckraumgehäuse
- 65: Druckausgleichsöffnung
- 67: Rückschlagventil
- 69: Scheibe
- 71: Feder
- 73: Anschlusskanal
- 75: Drosselquerschnitt
- 77: innen zentrierte Distanzscheibe
- 79; 85: Scheibe
- 81; 87: Ausnehmung
- 83: außen zentrierte Distanzscheibe
- 89: Gaspolster
- 91: Hülle

## Patentansprüche

1. Ventileinrichtung (1) für einen Schwingungsdämpfer (3), umfassend ein Dämpfventil (31; 33) mit einem Dämpfventilkörper (9) mit mindestens einem Durchtrittskanal (15, 17) für eine Strömungsrichtung, wobei eine Austrittsöffnung des Durchtrittskanals (15; 17) von einem Ventilkörper (19; 21) zumindest teilweise abgedeckt wird, wobei die Ventileinrichtung (1) zu dem Dämpfventil (21) einen Bypasskanal (49; 51; 53) aufweist, der Dämpfmedium zu einem Steuerraum (43) führt, dessen Druckniveau die Dämpfkraft der Ventileinrichtung (1) beeinflusst,
**dadurch gekennzeichnet,**
**dass** der Ventilkörper (21) des Dämpfventils (33) an den Steuerraum (43) angeschlossen ist und eine Rückseite des Ventilkörpers (21) vom Druckniveau im Steuerraum (43) beaufschlagt wird, wobei der Bypass (49; 51; 53) zum Steuerraum (43) durch den Ventilkörper (21) verläuft.

2. Ventileinrichtung nach Anspruch 1,
**dadurch gekennzeichnet,**
**dass** die Ventileinrichtung (1) ein topfförmiges Steuerraumgehäuse (45) aufweist, in dem der Ventilkörper (21) gleitet.

3. Ventileinrichtung nach Anspruch 2,
**dadurch gekennzeichnet,**
**dass** in dem Steuerraumgehäuse (45) eine auf den Ventilkörper (21) wirkende Schließfeder (27) angeordnet ist.

4. Ventileinrichtung nach Anspruch 2,
**dadurch gekennzeichnet,**
**dass** der Ventilkörper (21) eine Ventilkörperscheibe (35) und eine Führungshülse (41) umfasst, wobei die Führungshülse (41) im Steuerraum (43) gleitet.

5. Ventileinrichtung nach den Ansprüchen 2 und 3,
**dadurch gekennzeichnet,**
**dass** ein die Ventileinrichtung (1) haltender Führungsbolzen (37) zusammen mit dem Steuerraumgehäuse (45) und der Ventilkörperscheibe (35) den Steuerraum (43) begrenzt.

6. Ventileinrichtung nach Anspruch 1,
**dadurch gekennzeichnet,**
**dass** der Steuerraum (43) einen Strömungsanschluss (55) zu einem Druckraum (57) aufweist.

7. Ventileinrichtung nach Anspruch 6,
**dadurch gekennzeichnet,**
**dass** der Druckraum (57) zu einem Rückraum (61) durch einen verschiebbaren Trennkolben (59) getrennt ist.

8. Ventileinrichtung nach Anspruch 7,
**dadurch gekennzeichnet,**
**dass** der Trennkolben (59) in einem Druckraumgehäuse (63) angeordnet ist, das an dem Führungsbolzen (37) befestigt ist.

9. Ventileinrichtung nach Anspruch 8,
**dadurch gekennzeichnet,**
**dass** der Trennkolben (59) als Ringkolben ausgeführt ist.

10. Ventileinrichtung nach Anspruch 8,
**dadurch gekennzeichnet,**
**dass** der Trennkolben (59) auf dem Führungsbolzen (37) axial verschiebbar geführt ist.

11. Ventileinrichtung nach Anspruch 8,
**dadurch gekennzeichnet,**
**dass** ein durch den Trennkolben (59) vom Druckraum (57) abgetrennter Rückraum (61) mit Dämpfmedium gefüllt ist, wobei eine Druckausgleichsöffnung (65) im Rückraum (61) von einem Rückschlagventil (67) gesteuert wird, das sich in Abflussrichtung des Dämpfmediums aus dem Rückraum (61) öffnet.

12. Ventileinrichtung nach Anspruch 11,
**dadurch gekennzeichnet,**
**dass** das Rückschlagventil (65) von mindestens einer elastischen Scheibe (69) gebildet wird, die zwischen dem Druckraumgehäuse (63) und dem Steuerraumgehäuse (45) verspannt ist.

13. Ventileinrichtung nach Anspruch 7,
**dadurch gekennzeichnet,**
**dass** der Trennkolben (59) von mindestens einer Feder (71; 77; 79; 85; 83) in Richtung des Steuerraums (43) vorgespannt wird.

14. Ventileinrichtung nach Anspruch 6,
**dadurch gekennzeichnet,**
**dass** in dem Druckraum (57) ein Gaspolster (89) angeordnet ist.

15. Ventileinrichtung nach einem der Ansprüche 1 bis 14,
**dadurch gekennzeichnet,**
**dass** das Druckraumgehäuse (63) und das Steuerraumgehäuse (45) mit dem Dämpfventilkörper (7) am Führungsbolzen (37) verspannt sind.

16. Ventileinrichtung nach Anspruch 1,
**dadurch gekennzeichnet,**
**dass** das Steuerraumgehäuse (45) mindestens einen Anschlusskanal 73) an einen Durchtrittskanal (17) für eine zum Steuerraum (43) entgegengesetzte Strömungsrichtung aufweist.
